# EUROPEAN PATENT APPLICATION

(11) **EP 4 538 423 A1**
(43) Date of publication of application: **16.04.2025**
(21) Application number: 23823494.2
(22) Date of filing: 05.04.2023
(51) Int. Cl.: C23F 1/20, C23F 1/36, B32B 15/08

(54) **METHOD FOR PRODUCING ALUMINUM-RESIN COMPOSITE, AND SURFACE TREATMENT AGENT**

(30) Priority: 13.06.2022 JP 2022095187
(71) Applicant: MEC COMPANY., LTD., Amagasaki-shi, Hyogo 660-0822 (JP)
(72) Inventor: TAKAHASHI Masaru, Amagasaki-shi, Hyogo 660-0822 (JP)
(74) Representative: dompatent von Kreisler Selting Werner - Partnerschaft von Patent- und Rechtsanwälten mbB
(86) International application number: PCT/JP2023/014055
(87) International publication number: WO 2023/243190

(57) **Abstract**

The present invention addresses the problem of, inter alia, providing a production method capable of the continuous production of an aluminum-resin composite that exhibits a high bonding strength, and providing a surface treatment agent that can be used in this method. The production method includes: a first surface treatment step for bringing a surface of an aluminum member into contact with an alkaline surface treatment agent that contains an alkali source, an amphoteric metal ion, an oxidizing agent, and a thio compound; a second surface treatment step for bringing the aluminum member surface that has gone through the first surface treatment step into contact with an acidic surface treatment agent that contains halogen ion, aluminum ion, ammonium ion, and acid, and that contains the acid at 3.0 mass% or more and 4.9 mass% or less as the acid concentration and contains the aluminum ion at 0.2 mass% or more and 3.8 mass% or less; and a bonding step for bonding a resin composition to the aluminum member surface that has gone through the second surface treatment step.

## Description

### Technical Field

The present invention relates to a method for producing an aluminum-resin composite and a surface treatment agent used in the method.

### Background Art

A technique for producing an aluminum-resin composite in which a member made of aluminum and a resin are integrated has been developed in a wide range of industrial fields such as electric, electronic, and automobile fields. As a method of producing a composite from a member made of aluminum (hereinafter, also referred to as an aluminum member.) and a resin used for such a composite, there is a method of bonding a surface of the aluminum member and the resin using an adhesive. However, depending on the intended use of the composite, the heat resistance and the like of the adhesive may be a problem.

Therefore, a technique has been developed in which a surface of an aluminum member is chemically treated with a surface treatment agent such as an etching agent without using an adhesive, and a resin composition is bonded to the treated surface to produce an aluminum-resin composite.

When the aluminum member and the resin composition are bonded by chemical treatment, bonding strength is a problem. Therefore, there is a demand for improvement of a technique for improving bonding strength by chemical treatment.

Examples of such a technique include those described in Patent Document 1 and Patent Document 2 below.

Patent Document 1 describes that a surface of an aluminum member is roughened with an alkaline surface treatment agent containing an alkali source such as NaOH or KOH, and then the surface is further treated with an acidic solution such as a nitric acid aqueous solution, a sulfuric acid aqueous solution, or an aqueous solution containing sulfuric acid and hydrogen peroxide.

Patent Document 2 describes that an aluminum member is treated with an alkaline etching solution containing a thio compound, and then a roughened surface is further treated with an acidic etching solution containing at least one of a ferric ion and a cupric ion and an acid.

Patent Documents 1 and 2 describe that adhesion between aluminum and a resin composition can be improved by treating with an alkaline liquid and then further treating with an acidic liquid.

However, in the methods described in Patent Documents 1 and 2, when treatment is continuously performed, there is a case where the etching rate decreases and the performance of the surface treatment agent decreases. In this case, there is a problem that it is difficult to maintain the bonding strength of the obtained composite high, and it is necessary to frequently exchange each liquid in order to maintain the bonding strength sufficiently high.

### Documents for prior art

### Patent Documents

Patent Document 1: JP 2011-195949 A
Patent Document 2: JP 2013-052671 A

### Summary of Invention

### Technical Problem

The present invention has been made in view of the above-described problems of the prior art, and an object of the present invention is to provide a production method capable of continuously producing an aluminum-resin composite having high bonding strength, and a surface treatment agent that can be used in the production method.

### Solution to Problem

The present invention includes: a first surface treatment step of bringing an alkaline surface treatment agent containing an alkali source, an amphoteric metal ion, an oxidizing agent, and a thio compound into contact with a surface of an aluminum member; a second surface treatment step of bringing an acidic surface treatment agent containing a halogen ion, an aluminum ion, an ammonium ion, and an acid and containing the acid in an acid concentration of 3.0 mass% or more and 4.9 mass% or less and the aluminum ion in an acid concentration of 0.2 mass% or more and 3.8 mass% or less into contact with the surface of the aluminum member subjected to the first surface treatment step; and a bonding step of bonding a resin composition to the surface of the aluminum member subjected to the second surface treatment step.

In the present invention, the acidic surface treatment agent may contain an amine compound.

In the present invention, the acidic surface treatment agent may contain 0.05 mass% or more and 5.0 mass% or less of the amine compound.

In the present invention, the acidic surface treatment agent may contain 0.033 mass% or more and 3.37 mass% or less of the ammonium ions.

In the present invention, the halogen ion may be at least one selected from the group consisting of a chlorine ion, a bromine ion, and a fluorine ion.

In the present invention, the acidic surface treatment agent may contain hydrochloric acid, aluminum chloride, and ammonium chloride.

In the present invention, the thio compound of the alkaline surface treatment agent may be one or more kinds selected from a thiosulfate ion and a thio compound having 1 to 7 carbon atoms.

The present invention may further include a cleaning step of ultrasonically cleaning the surface of the aluminum member that has undergone the second surface treatment step.

In the present invention, in the second surface treatment step, the acid concentration of the acidic surface treatment agent may be maintained in a range of 3.0 mass% or more and 4.9 mass% or less.

In the present invention, in the second surface treatment step, the aluminum ion concentration of the acidic surface treatment agent may be maintained in a range of 0.2 mass% or more and 3.8 mass% or less.

The surface of the aluminum member subjected to the second surface treatment step may have an arithmetic average roughness (Ra) of 0.5 µm or more and 3.0 µm or less and a ten-point average roughness (Rz) of 8 µm or more and 30 µm or less.

The present invention related to a surface treatment agent is an acidic solution containing a halogen ion, an acid having an acid concentration of 3.0 mass% or more and 4.9 mass% or less, an aluminum ion having an acid concentration of 0.2 mass% or more and 3.8 mass% or less, and an ammonium ion having an acid concentration of 0.033 mass% or more and 3.37 mass% or less, and roughens aluminum by chemical etching by bringing the acidic solution into contact with a surface of an aluminum member.

In the present invention related to the surface treatment agent, the acidic solution may contain 0.05 mass% or more and 5.0 mass% or less of the amine compound.

In the present invention related to the surface treatment agent, the halogen ion may be at least one selected from the group consisting of a chlorine ion, a bromine ion, and a fluorine ion.

In the present invention related to the surface treatment agent, the acidic solution may contain hydrochloric acid, aluminum chloride, and ammonium chloride.

### Effects of Invention

According to the present invention, it is possible to provide a production method capable of continuously producing an aluminum-resin composite having high bonding strength, and a surface treatment agent that can be used in the production method.

### Brief Description of Drawings

Fig. 1 is a schematic perspective view showing an aluminum-resin composite for test used in the present Example.
Fig. 2(a) is a top view and Fig. 2(b) is a side view of the aluminum-resin composite for test in Fig. 1.
Fig. 3 is a graph showing transition of an aluminum concentration in a cycle test of Examples.
Fig. 4 is a graph showing transition of each performance in a cycle test of Examples.
Fig. 5 is a graph showing transition of each performance in a cycle test of Examples.
Fig. 6 is a graph showing transition of an aluminum concentration in a cycle test of a Comparative Example.
Fig. 7 is a graph showing transition of each performance in a cycle test of the Comparative Example.
Fig. 8 is a graph showing transition of each performance in a cycle test of the Comparative Example.
Fig. 9 is a graph showing a relationship between an aluminum concentration and an etching amount in a cycle test of the Comparative Example.
Fig. 10 is a graph showing transition of an aluminum concentration in a cycle test of Examples.
Fig. 11 is a graph showing transition of each performance in a cycle test of Examples.
Fig. 12 is a graph showing transition of each performance in a cycle test of Examples.
Fig. 13 is a graph showing transition of each performance (values of Ra and Rz) in a cycle test of Examples.

### Description of Embodiments

Hereinafter, embodiments of a method for producing an aluminum-resin composite of the present invention (hereinafter, also simply referred to as a production method) and a surface treatment agent will be described.

The method for producing an aluminum-resin composite of the present embodiment is a method for producing an aluminum-resin composite, the method including: a first surface treatment step of bringing an alkaline surface treatment agent containing an alkali source, an amphoteric metal ion, an oxidizing agent, and a thio compound into contact with a surface of an aluminum member; a second surface treatment step of bringing an acidic surface treatment agent containing a halogen ion, an aluminum ion, an ammonium ion, and an acid and containing the acid in an acid concentration of 3.0 mass% or more and 4.9 mass% or less and the aluminum ion in an acid concentration of 0.2 mass% or more and 3.8 mass% or less into contact with the surface of the aluminum member subjected to the first surface treatment step; and a bonding step of bonding a resin composition to the surface of the aluminum member subjected to the second surface treatment step.

### [Aluminum-Resin Composite]

The production method of the present embodiment is a method for producing an aluminum-resin composite (hereinafter, also referred to as "composite") by bonding a resin composition to an aluminum member.

The composite may be one in which the aluminum member and the resin composition are integrated, and the use thereof is not particularly limited. For example, it may be used as various machine parts such as electronic device parts, home electric appliance parts, and transport machine parts. More specifically, it may be used as various electronic device parts for mobile applications and the like, home appliance parts, medical device parts, vehicle structural parts, vehicle mounting parts, other electric parts, heat dissipation parts, and the like.

### [First Surface Treatment Step]

In the first surface treatment step, an alkaline surface treatment agent containing an alkali source, an amphoteric metal ion, an oxidizing agent, and a thio compound is brought into contact with the surface of an aluminum member.

### (Aluminum Member)

The aluminum member refers to a member made of aluminum. The "aluminum" in the present embodiment may be made of aluminum or an aluminum alloy. Hereinafter, "aluminum" in the present specification refers to aluminum or an aluminum alloy.

The aluminum of the present embodiment is not particularly limited, and examples thereof include alloys containing other metals such as Cu, Si, Fe, Mn, Mg, Zn, Ti, Ni, and Cr in aluminum, pure aluminum, and those containing impurities therein.

In the case where the aluminum of the present embodiment is an alloy, the presence or absence of processing is not particularly limited, and examples thereof include a material obtained as it is manufactured as is (F), and a material obtained by performing temper such as annealing (O), work hardening (H), and heat treatment (T). In the case of a thermal temper type alloy, for example, a temper material of any of a T3 temper, a T6 temper, and a T7 temper, and the like can be mentioned.

The temper material of T3, T6, or T7 temper in the present embodiment means an alloy subjected to each temper described in JIS H 0001 (Quality List of Aluminum and Aluminum Alloy).

The shape of the aluminum member is not particularly limited. For example, a block of aluminum, a plate material, a bar material, or the like can be machined into a desired shape by performing plastic working, saw working, milling, electrical discharge working, drilling, pressing, grinding, polishing, or the like alone, or a combination thereof.

It is desirable that the aluminum member does not have a thick coating made of an oxide film, a hydroxide, or the like on the surface to which the resin composition is bonded. In order to remove such a thick coating, the surface layer may be polished by mechanical polishing such as sandblasting, shot blasting, grinding, or barrel processing, or chemical polishing before being treated with the surface treatment agent.

### (Alkaline Surface Treatment Agent)

The alkaline surface treatment agent of the present embodiment is an alkaline surface treatment agent containing an alkali source, an amphoteric metal ion, an oxidizing agent, and a thio compound.

### <Alkali Source>

The alkali source is not particularly limited, and examples thereof include NaOH and KOH. When NaOH or KOH is used as an alkali source, the content of hydroxide ions is 0.60 wt% or more and 22.80 wt% or less, or 1.45 wt% or more and 16.30 wt% or less, or 2.50 wt% or more and 12.25 wt% or less, or 5.0 mass% or more and 9.3 mass% or less.

When the concentration of hydroxide ions as an alkali source is in the above range, there is an advantage that a good roughened shape (dense irregularity shape) can be obtained, and at the same time, an appropriate roughening treatment rate can be easily obtained.

### <Amphoteric Metal Ion>

The amphoteric metal ion is not particularly limited as long as it undergoes a substitution reaction with aluminum on the surface of the aluminum member.

For example, ions of an amphoteric metal having a smaller ionization tendency than Al is exemplified, and more specific examples thereof include Zn ions, Pb ions, Sn ions, Sb ions, and Cd ions. In particular, from the viewpoint of obtaining a good roughened shape suitable for improving the adhesion between the aluminum member and the resin composition and from the viewpoint of reducing the environmental load, Zn ions and Sn ions are preferable, and Zn ions are more preferable.

The concentration of the amphoteric metal ion is, for example, 0.2 mass% or more and 6.0 mass% or less, 0.5 mass% or more and 4.4 mass% or less, 1.0 mass% or more and 3.5 mass% or less, or 1.9 mass% or more and 3.5 mass% or less.

When the concentration of the amphoteric metal ion is in the above range, there is an advantage that a good roughened shape can be obtained, and at the same time, an appropriate roughening treatment speed can be easily obtained.

The amphoteric metal ion source is not particularly limited, but examples of the amphoteric metal ion source include zinc nitrate, zinc borate, zinc chloride, zinc sulfate, zinc bromide, basic zinc carbonate, zinc oxide, and zinc sulfide in the case of a Zn ion source. Examples of the Sn ion source include tin (IV) chloride, tin (II) chloride, tin (II) acetate, tin (II) bromide, tin (II) diphosphate, tin (II) oxalate, tin (II) oxide, tin (II) iodide, tin (II) sulfate, tin (IV) sulfide, and tin (II) stearate.

The amphoteric metal ion undergoes a substitution reaction with aluminum on the surface of the aluminum member to precipitate an amphoteric metal on the surface of the aluminum member, and the amphoteric metal is redissolved in the surface treatment agent by the oxidizing agent described later. As described above, it is considered that the amphoteric metal is repeatedly precipitated and dissolved in a liquid as ions thereof to form an irregularity shape suitable for improving adhesion with the resin composition, that is, a roughened shape on the surface of the aluminum member.

### <Oxidizing Agent>

The oxidizing agent is not particularly limited as long as it can dissolve the amphoteric metal in an alkaline surface treatment agent. Examples thereof include chloric acids such as chlorous acid and hypochlorous acid, and salts thereof, oxidizing metal salts such as permanganate, chromate, dichromate, and cerium (IV) salt, nitro group-containing compounds, peroxides such as hydrogen peroxide and persulfate, nitric acid, and nitrate ions.

In particular, nitric acid and nitrate ions are preferable from the viewpoint of easy handling.

When nitrate ions are used as the oxidizing agent, the nitrate ion source is not particularly limited, and examples thereof include nitric acid, sodium nitrate, potassium nitrate, barium nitrate, calcium nitrate, ammonium nitrate, and zinc nitrate.

The concentration of the oxidizing agent is, for example, 0.5 mass% or more and 10 mass% or less, 1.0 mass% or more and 8.4 mass% or less, or 2.0 mass% or more and 6.0 mass% or less.

When the concentration of the oxidizing agent is in the above range, there is an advantage that a good roughened shape can be obtained, and at the same time, an appropriate roughening treatment speed can be easily obtained.

### <Thio Compound>

The thio compound is contained in the alkaline surface treatment agent of the present embodiment as a component capable of forming dense irregularities on the surface of the aluminum member and further improving airtightness and watertightness at the bonding interface of the composite.

The thio compound is not particularly limited as long as it can exhibit the above-described action, and examples thereof include one or more kinds selected from a thiosulfate ion and a thio compound having 1 to 7 carbon atoms. In particular, one or more kinds selected from a thiosulfate ion and a thio compound having 1 to 3 carbon atoms are more preferable.

The thiosulfate ion can be contained in the surface treatment agent by blending the ion source.

Examples of the thio compound having 1 and 7 carbon atoms include thiourea (1 carbon atom), thioglycolic acid ion (2 carbon atoms), thioglycolic acid (2 carbon atoms), thioglycerol (3 carbon atoms), L-thioproline (4 carbon atoms), dithiodiglycolic acid (4 carbon atoms), β,β'-thiodipropionic acid (5 carbon atoms), N,N-diethyldithiocarbamic acid ion (5 carbon atoms), 3,3' - dithiodipropionic acid (6 carbon atoms), 3,3'-dithiodipropanol (6 carbon atoms), o-thiocresol (7 carbon atoms), and p-thiocresol (7 carbon atoms).

The concentration of the thio compound is, for example, 0.05 mass% or more and 25 mass% or less, 0.1 mass% or more and 20 mass% or less, or 0.2 mass% or more and 15 mass% or less.

When the concentration of the thio compound is in the above range, there is an advantage that a dense roughened shape is obtained, and airtightness and watertightness at the bonding interface of the composite are easily further improved.

### <Other Components>

Other additives may be added to the alkaline surface treatment agent of the present embodiment as necessary. Examples of other components include additives for suppressing sludge generation associated with dissolution of aluminum, such as oxycarboxylic acids such as citric acid, malic acid, and gluconic acid and salts thereof, surfactants for removing surface contaminants that cause roughening unevenness, and pH adjusting agents.

When these other components are added, the content thereof is preferably about 0.1 mass% or more and 5 mass% or less.

The pH of the alkaline surface treatment agent is not particularly limited, but may be in the range of pH 12 or more.

An alkaline surface treatment agent can be easily prepared by dissolving each of the above components in an appropriate solvent such as ion-exchanged water, pure water, or ultrapure water.

As each component of the alkaline surface treatment agent, the exemplified components can be used alone or in combination of two or more thereof unless otherwise specified.

In the first surface treatment step, the method for bringing the surface treatment agent into contact with the surface of the aluminum member is not particularly limited, and treatment can be performed by a known method. Examples thereof include a treatment method by immersion, spraying, or the like. The treatment temperature and the treatment time can also be appropriately adjusted. Examples thereof include a treatment temperature of 25 to 45°C and a treatment time of about 30 to 90 seconds.

### [Second Surface Treatment Step]

In the second surface treatment step, an acidic surface treatment agent containing a halogen ion, an aluminum ion, an ammonium ion, and an acid and containing the acid in an acid concentration of 3.0 mass% or more and 4.9 mass% or less and the aluminum ion of 0.2 mass% or more and 3.8 mass% or less is brought into contact with the surface of the aluminum member subjected to the first surface treatment step.

### (Acidic Surface Treatment Agent)

The surface treatment agent used in the second surface treatment step of the present embodiment is a treatment agent composed of an acidic solution, and contains a halogen ion, an aluminum ion, an ammonium ion, and an acid, and contains the acid in an acid concentration of 3.0 mass% or more and 4.9 mass% or less and the aluminum ion of 0.2 mass% or more and 3.8 mass% or less.

### <Halogen Ion>

The halogen ion has an action of controlling the surface shape of the aluminum member obtained in the first surface treatment step to a shape capable of improving adhesion with the resin composition.

The concentration of the halogen ion is, for example, 9.1 mass% or more and 35.2 mass% or less, 9.6 mass% or more and 31.6 mass% or less, or 10.0 mass% or more and 28.8 mass% or less.

When the concentration of the halogen ion is in the above range, there is an advantage that it is easy to control into a shape capable of improving adhesion to the resin composition.

The halogen ion is not particularly limited, and examples thereof include at least one selected from the group consisting of a chlorine ion, a bromine ion, and a fluorine ion.

The halogen ion source is not particularly limited, and examples thereof include hydrohalic acids such as hydrochloric acid, and halogen compounds such as aluminum chloride, sodium chloride, magnesium chloride, calcium chloride, ammonium chloride, ammonium bromide, ammonium fluoride, and chloroacetic acid.

The halogen ion source may be a compound that functions as a supply source of aluminum ions, ammonium ions, and acids to be described later at the same time as the halogen ion supply source.

### <Aluminum Ion>

Aluminum ion has an action of controlling a shape capable of improving adhesion to the resin composition.

The concentration of aluminum ions is, for example, 0.20 mass% or more and 3.8 mass% or less, 0.25 mass% or more and 3.5 mass% or less, or 0.30 mass% or more and 3.3 mass% or less.

When the concentration of the aluminum ion is in the above range, there is an advantage that it is easy to control into a shape capable of improving adhesion to the resin composition.

The aluminum source is not particularly limited, and examples thereof include aluminum salt such as aluminum chloride, aluminum sulfate, aluminum oxide, aluminum nitrate, aluminum lactate, aluminum bromide, and aluminum metal (flake, powder, and the like).

When aluminum chloride is used as the aluminum source, the aluminum source also functions as a halogen ion supply source for chlorine ions and the like.

Acidic liquids are generally known to be highly reactive toward aluminum. Therefore, it is conceivable to adjust the reactivity by setting the aluminum concentration in the liquid to be high. However, in this case, when the aluminum member is continuously treated, the aluminum concentration decreases due to, for example, carrying of flush water into the surface treatment agent. As a result, the surface of the aluminum member cannot be adjusted to a preferable shape. Furthermore, in order to adjust the aluminum concentration, it is conceivable to perform the treatment while supplying the aluminum ions. However, in order to supply the aluminum ions, it is necessary to supply a liquid in which a high-concentration aluminum salt is dissolved, and the supply cost may be increased. In addition, it may be difficult to keep the aluminum concentration constant in the first place depending on the amount of flush water carried.

Therefore, the acidic surface treatment agent of the present embodiment can be stably adjusted to a preferable shape even if the treatment is continuously performed by blending a relatively low concentration of aluminum ions, and at the same time, allowing ammonium ions to be described later to coexist, and further adding an amine compound or the like.

### <Ammonium Ion>

Ammonium ion has an action of controlling a shape capable of improving adhesion to the resin composition.

The concentration of ammonium ions is, for example, 0.033 mass% or more and 3.37 mass% or less, 0.10 mass% or more and 2.70 mass% or less, or 0.17 mass% or more and 1.68 mass% or less.

When the concentration of the ammonium ion is in the above range, there is an advantage that it is easy to control into a shape capable of improving adhesion to the resin composition.

The ammonium ion source is not particularly limited, and examples thereof include ammonium salts such as ammonium chloride, ammonium bromide, ammonium fluoride, methyl ammonium chloride, dimethyl ammonium chloride, trimethyl ammonium chloride, and quaternary alkyl ammonium salts such as tetramethyl ammonium chloride.

When ammonium chloride is used as the ammonium source, the ammonium chloride also functions as a halogen ion supply source for chlorine ions and the like.

### <Amine Compound>

The acidic surface treatment agent of the present embodiment may contain an amine compound.

The amine compound has an effect of making it easy to control a shape capable of improving adhesion to the resin composition.

The concentration of the amine compound is, for example, 0.05 mass% or more and 5.0 mass% or less, 0.10 mass% or more and 4.8 mass% or less, or 0.20 mass% or more and 4.5 mass% or less.

When the concentration of the amine compound is in the above range, there is an advantage that it is easy to continue to control to a shape capable of improving adhesion even when treatment is continuously performed. When the concentration of the amine compound is in the above range, the etching performance on the aluminum surface is improved. Therefore, there is also an advantage that an aluminum-resin composite having high bonding strength can be obtained even when a type of aluminum that is relatively difficult to be etched is used.

The amine compound is not particularly limited, and examples thereof include alkanolamines such as monovalent hydroxyalcohol compounds such as monoethanolamine, dimethylaminoethanol, diethylaminoethanol, methylaminoethanol, ethylaminoethanol, dimethylaminopropanol, methylaminopropanol, diethylaminopropanol, and butylaminobutanol, divalent hydroxyalcohol compounds such as diethanolamine, ethyldiethanolamine, and butyldiethanolamine, and trivalent hydroxyalcohol compounds such as triethanolamine.

Examples of the amine compound include a polyamine-based polymer such as polyallylamine or a polyallylamine salt and/or a copolymer of a hydrochloride of these polymers, a diallylamine polymer, a diallylamine salt polymer, a diallylamine/sulfur dioxide copolymer, a diallylamine salt/sulfur dioxide copolymer, and/or a copolymer of a hydrochloride of these polymers.

### <Acid>

The acid has an action of controlling a shape capable of improving adhesion to the resin composition.

The concentration of the acid is, for example, 3.0 mass% or more and 4.9 mass% or less, or 3.05 mass% or more and 4.5 mass% or less as the acid concentration.

When the concentration of the acid is in the above range, there is an advantage that it is easy to continue to control to a shape capable of improving adhesion even when treatment is continuously performed.

The acid is not particularly limited, and examples thereof include inorganic acids such as hydrochloric acid, sulfuric acid, nitric acid, phosphoric acid and hydrofluoric acid, and organic acids such as acetic acid and formic acid.

When hydrochloric acid is used as the acid, the acid also functions as a source of halogen ions such as chlorine ions.

When hydrochloric acid is used as an acid, for example, when 35% hydrochloric acid is used, the hydrochloric acid is contained in an amount of 8.5 mass% or more and 14.0 mass% or less, or 8.7 mass% or more and 12.85 mass% or less in order to have the acid concentration in the above range.

Examples of the component capable of simultaneously supplying the halogen ion source and each of the above components in the acidic surface treatment agent of the present embodiment include that the acidic surface treatment agent contains hydrochloric acid, aluminum chloride, and ammonium chloride.

That is, the acidic surface treatment agent containing such a component includes halogen ions, aluminum chloride as a supply source of aluminum ions, halogen ions, ammonium chloride as a supply source of ammonium ions, halogen ions, and hydrochloric acid as a supply source of acid.

### <Other Components>

Other additives may be added to the acidic surface treatment agent of the present embodiment as necessary.

Examples of the other component include a pH adjusting agent, a metal ion or a metal compound such as a copper ion or an iron ion, and an oxidizing agent such as sodium persulfate, sodium perchlorate, nitric acid, or potassium nitrate.

When these other components are added, the content thereof is preferably about 0.05 mass% or more and 5.0 mass% or less.

An acidic surface treatment agent can be easily prepared by dissolving each of the above components in an appropriate solvent such as ion-exchanged water, pure water, or ultrapure water.

The pH of the acidic surface treatment agent is not particularly limited, but may be in the range of pH 2 or less.

As each component of the acidic surface treatment agent, the exemplified components can be used alone or in combination of two or more thereof unless otherwise specified.

The acidic surface treatment agent of the present embodiment is a surface treatment agent that roughens aluminum by chemical etching by coming into contact with the surface of the aluminum member.

That is, fine irregularities are formed (roughened) on the surface of the aluminum member by a chemical etching action without using electricity like electrolytic etching.

In the second surface treatment step, the method for bringing the acidic surface treatment agent into contact with the surface of the aluminum member is not particularly limited, and treatment can be performed by a known method. Examples thereof include a treatment method by immersion, spraying, or the like. The treatment temperature and the treatment time can also be appropriately adjusted. Examples thereof include a treatment temperature of 25 to 40°C and a treatment time of about 30 to 600 seconds.

In the second surface treatment step, in the case of continuous treatment, an additive may be appropriately added so as not to deviate from a certain range using the concentration of each component as a management index.

For example, when the acid concentration is used as the management index, the acid concentration may be maintained in a range of 3.0 mass% or more and 4.9 mass% or less, or 3.1 mass% or more and 4.5 mass% or less.

Alternatively, when the aluminum ion concentration is used as the management index, the concentration may be maintained in a range of 0.2 mass% or more and 3.8 mass% or less, 0.25 mass% or more and 3.5 mass% or less, or 0.30 mass% or more and 3.3 mass% or less.

By maintaining the acid concentration or/and the aluminum ion concentration within the above ranges, the performance of the acidic surface treatment agent can be maintained, and the surface of the aluminum member can have an appropriate surface shape such that the bonding strength with the resin composition is sufficiently high.

In order to maintain the concentration range of each component on the basis of the management index, a treatment of adding an appropriate additive in a timely manner is performed.

As the additive, an acid component is added when the acid concentration is used as the management index, and an aluminum ion source is added when the aluminum ion concentration is used as the management index. In this case, the respective components may be added alone, or a mixed component obtained by mixing the respective components may be added.

The surface of the aluminum member subjected to the second surface treatment step may have, for example, the following surface shape.

That is, the arithmetic average roughness (Ra) is 0.5 µm or more and 3.0 µm or less, or 1.1 µm or more and 3.0 µm or less, or 1.1 µm or more and 2.5 µm or less, and the ten-point average roughness (Rz) is 8 µm or more and 30 µm or less, or 10 µm or more and 30 µm or less, or 10 µm or more and 25 µm or less.

By forming the surface shape as described above, the bonding strength of the resulting aluminum-resin composite can be sufficiently increased.

In the method of the present embodiment, even if the second surface treatment step is repeatedly and continuously performed, the surface shape of the aluminum member subjected to the second surface treatment step can be maintained to be the surface shape as described above.

The numerical values of the arithmetic average roughness (Ra) and the ten-point average roughness (Rz) mean that the average value measured three or more times for each sample is included in the above numerical range.

### [Cleaning Step]

The production method of the present embodiment includes a cleaning step of ultrasonically cleaning the surface of the aluminum member subjected to the second surface treatment step.

The treatment conditions of the ultrasonic cleaning performed in the cleaning step are not particularly limited, and for example, the ultrasonic cleaning may be performed at a treatment temperature of 25°C to 60°C for 3 minutes to 15 minutes at a frequency of 25 kHz to 120 kHz, preferably 40 kHz to 80 kHz. The ultrasonic treatment may be repeated a plurality of times.

By such cleaning, the hardly soluble component (smut) and the like present on the surface of the aluminum member after the first and second surface treatment steps can be removed from the surface of the aluminum member, and the adhesion between the aluminum member and the resin composition after bonding performed later is improved, so that high bonding strength is obtained.

In the cleaning step, the ultrasonic cleaning may be performed after bringing a nitric acid aqueous solution having an acid concentration of 10.0 mass% or more and 50.0 mass% or less into contact with the surface of the aluminum member.

The contact with the nitric acid aqueous solution is optional, but the cleaning effect by ultrasonic cleaning is further enhanced by performing such a contact treatment.

The method for contacting the nitric acid aqueous solution is not particularly limited, and the contact can be performed by a known method. Examples thereof include a method by immersion, spraying, or the like. The treatment temperature and the treatment time can also be appropriately adjusted. Examples thereof include a treatment temperature of 25 to 35°C and a treatment time of about 30 to 60 seconds.

### [Other Steps]

The method of the present embodiment may optionally include additional steps before and after each step.

For example, by performing a cleaning step with water or another cleaning liquid or a drying step of drying the treated surface after each step, the effect of the treatment of each step can be further enhanced.

### [Bonding Step]

The method of the present embodiment includes a bonding step of bonding a resin composition to the surface of the aluminum member subjected to the cleaning step.

### (Resin Composition)

The resin composition used in the present embodiment is not particularly limited as long as it can be bonded to an aluminum member, and examples thereof include a polyphenylene sulfide (PPS) resin, a liquid crystal polymer, a polyamideimide resin, a polyimide resin, a polyamide resin, a polyether ether ketone (PEEK) resin, a polybutylene terephthalate (PBT) resin, an epoxy resin, a tetrafluoroethylene-ethylene copolymer (ETFE) resin, a tetrafluoroethylene-perfluoroalkyl vinyl ether copolymer (PFA) resin, a polytetrafluoroethylene (PTFE) resin, and the like.

The method for bonding the resin composition to the surface of the aluminum member in the bonding step is not particularly limited, and examples thereof include a coating method in which the resin composition is dissolved or dispersed in a solvent and applied, and a method in which the resin composition is bonded to the surface of the aluminum member by an injection molding method.

As conditions for bonding the resin composition and the aluminum member, known conditions can be appropriately set.

For example, since the expected bonding strength varies depending on the type of resin, it is preferable to set a bonding condition for obtaining a desired bonding strength according to the type of resin.

The composite produced by the method for producing an aluminum-resin composite of the present embodiment can obtain high bonding strength.

In addition, in the method for producing an aluminum-resin composite of the present embodiment, an aluminum-resin composite having high bonding strength as described above can be obtained even when the aluminum member is continuously treated.

The acidic surface treatment agent of the present embodiment can also be used as a surface treatment agent (hereinafter, also referred to as a chemical surface treatment agent) for chemically etching the surface of the aluminum member by a method other than the production method of the present embodiment described above.

In this case, the surface of the aluminum member may be roughened to a desired degree by another means (mechanical polishing means, chemical polishing means, and the like) before being treated with the surface treatment agent.

The chemical surface treatment agent of the present embodiment can form a surface shape that improves adhesion to the resin composition by further adjusting the fine irregularity shape of the aluminum surface.

For example, by treating an aluminum member having fine irregularities formed on a surface thereof by mechanical polishing or chemical polishing with a known aluminum roughening agent or the like with the chemical surface treatment agent of the present embodiment, an aluminum member having a surface shape in which the arithmetic average roughness (Ra) is 0.5 µm or more and 3.0 µm or less, or 1.1 µm or more and 3.0 µm or less, or 1.1 µm or more and 2.5 µm or less, and the ten-point average roughness (Rz) is 8 µm or more and 30 µm or less, or 10 µm or more and 30 µm or less, or 10 µm or more and 25 µm or less is obtained.

The surface shape as described above can be used for applications in which the roughened shape of the surface of the treated aluminum member is utilized, for example, applications in which a resin composition is bonded.

Aluminum constituting the aluminum member generally has differences in ease of roughening and a roughened shape after surface treatment depending on differences in production method, composition, lot, and the like. By performing the surface treatment by the method for producing an aluminum-resin composite of the present embodiment, a surface shape that improves adhesion with the resin composition can be formed according to the type of aluminum member, and thus various aluminum members can be used.

The method for producing an aluminum-resin composite and the surface treatment agent according to the present embodiment are as described above, but it should be considered that the embodiment disclosed herein is an example in all respects and is not restrictive. The scope of the present invention is indicated not by the above description but by the claims, and it is intended that meanings equivalent to the claims and all modifications within the scope are included.

### Example

Hereinafter, the present invention will be described more specifically with reference to examples, but the present invention is not limited to these examples.

### [Test 1: Strength Test]

### (Surface Treatment Agent)

An alkaline surface treatment agent and an acidic surface treatment agent used in this Example were prepared.

Each of the surface treatment agents is an aqueous solution obtained by dissolving the following materials in ion-exchanged water so as to have the concentration (values in terms of ion concentration and acid concentration are also displayed) of each component described in Table 1.
Sodium hydroxide: manufactured by KISHIDA CHEMICAL Co., Ltd., reagent (special grade)
Zinc nitrate hexahydrate: manufactured by KISHIDA CHEMICAL Co., Ltd., reagent (primary grade)
Sodium thiosulfate pentahydrate: manufactured by FUJIFILM Wako Pure Chemical Corporation, reagent (special grade)
35% hydrochloric acid: manufactured by KISHIDA CHEMICAL Co., Ltd., reagent (special grade)
Aluminum chloride hexahydrate: manufactured by FUJIFILM Wako Pure Chemical Corporation, reagent (special grade)
Ammonium chloride: manufactured by FUJIFILM Wako Pure Chemical Corporation, reagent (special grade)
Monoethanolamine: manufactured by Sigma-Aldrich, reagent (special grade)

The pH of the alkaline surface treatment agent used in Comparative Examples was 12 or more, and the pH of the acidic surface treatment agent was 2 or less.

**[Table 1]**

| **Blending wt%** | | |
|---|---|---|
| **Alkaline surface treatment agent** | **24% Sodium hydroxide** | **65.0** |
| | **Zinc nitrate hexahydrate** | **10** |
| | **Sodium thiosulfate pentahydrate** | **0.5** |
| | **DI water** | **24.5** |

| **Blending wt%** | | **Surface treatment agent 1** | | **Surface treatment agent 2** |
|---|---|---|---|---|
| **Acidic surface treatment agent** | **Aluminum chloride hexahydrate** | **8** | **(Aluminum concentration 0.9)** | **8** |
| | **35% HCl** | **11.5** | **(Acid concentration 4.0)** | **11.5** |
| | **Ammonium chloride** | **1** | **(Ammonium ion concentration 0.34)** | **1** |
| | **Monoethanolamine** | **0.5** | | **0** |
| | **DI water** | **79** | | **79.5** |

### (Aluminum Member)

A member made of the following alloy having the composition described in Table 2 was prepared as a sample.

As the alloy for the member, the same alloy having different lots (alloy lots 1 and 2) was used.

Al-Si alloy (A4032FH-T6): T6 temper material of free-forged product (FH)

**[Table 2]**

| **Alloy** | **Chemical component (%)** | | | | | | | | |
|---|---|---|---|---|---|---|---|---|---|
| | **Si** | **Fe** | **Cu** | **Mn** | **Mg** | **Cr** | **Zn** | **Ti** | **Others** |
| **A4032** | **11.0 to 13.5** | **1.0 or less** | **0.50 to 1.3** | **-** | **0.8 to 1.3** | **0.10 or less** | **0.25 or less** | **-** | **Ni:0.50 to 1.3** |

### (Resin Composition)

A PPS resin (1135MF1, manufactured by Polyplastics Co., Ltd.) was prepared as a resin composition.

### (Etching amount)

The etching amount of each aluminum member was calculated by the following method, and the value was expressed in µm. Etching amount = mass difference before and after treatment ÷ specific gravity of aluminum ÷ treatment surface area

Mass difference before and after treatment: Mass difference measured before the first surface treatment step and after the cleaning step for each aluminum member

Specific Gravity of Aluminum: 2.7

Treatment surface area: surface area of aluminum member

Since the etching amount is a result measured after treatment with an alkaline surface treatment agent and an acidic surface treatment agent, the etching amount is the sum of the etching amounts by both treatments.

### (Tensile Shear Strength)

Each aluminum member was subjected to the following treatment using each surface treatment agent.

An immersion treatment was performed with an alkaline surface treatment agent at 35°C for 1 minute, and then the surface was washed with water. Further, immersion treatment was performed at a temperature and a treatment time shown in Table 3 using the acidic surface treatment agents of Examples and Comparative Examples. Further, the surface was washed with water at room temperature for 0.5 minutes, and immersed in a 15% nitric acid aqueous solution at room temperature for 0.5 minutes. Thereafter, ultrasonic cleaning was performed for 2 to 3 minutes with an ultrasonic cleaning apparatus (Apparatus used: model CPX-2800H-J, manufactured by Yamato Scientific Co., Ltd., condition: frequency 40 kHz, room temperature), water washing was further performed for 0.5 minutes at room temperature, and then drying was performed with a dryer.

The treatment time of the second surface treatment step was appropriately adjusted so as to be in an appropriate roughened state (etching amount).

Further, after the above treatment, injection molding (Apparatus used: Model STX20S2V, Nissei Plastic Industrial Co., Ltd.) was performed under the following molding conditions to obtain an aluminum-resin composite of a test piece.

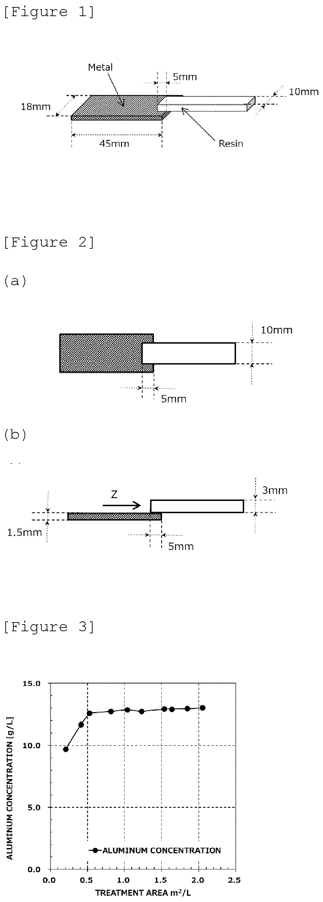

As shown in Fig. 1, the aluminum-resin composite was molded in a state in which a resin piece having a length of 45 mm, a width of 10 mm, and a thickness of 3 mm was attached to one surface on a side of 18 mm of a rectangular aluminum plate having a side of 45 mm, a width of 18 mm, and a thickness of 1.5 mm so as to have an overlapping portion of 5 mm × 10 mm.

Molding Conditions
Cylinder temperature: 290°C
Mold temperature: 160°C
Theoretical injection amount: 66 cm³/sec
Injection pressure: 74 MPa
Injection speed: 120 mm/s
Screw rotation speed: 84 rpm
Holding pressure: 74 MPa
Cooling time: 20 seconds

The test piece was pulled in a direction Z shown in Fig. 2(b) at a tensile speed of 10 mm/min by a tensile tester (Device used: Model precision universal tester AG-20kNXDplus, manufactured by SHIMADZU CORPORATION), and the strength at the time of breaking was defined as a tensile shear strength. The measurement results are shown in Table 3.

### (Surface Roughness)

The surface roughness of each aluminum member after being treated with an acidic surface treatment agent was measured by the following method.

Method for measuring arithmetic average roughness (Ra) and ten-point average roughness (Rz):
The arithmetic average roughness (Ra) and the ten-point average roughness (Rz) were measured by a laser microscope using a non-contact confocal method. Measurement was performed by a laser microscope (Device used: Model OPTELICS HYBLID+, manufactured by Lasertec Co., Ltd.) using an objective lens with a magnification of 50 times. The surface roughness was measured in accordance with a contact type standard (JIS B 0633:2001). For each sample, the arithmetic average roughness (Ra) and the ten-point average roughness (Rz) were measured three times, and the respective average values were obtained.

The results are shown in Table 3.

**[Table 3]**

| | **Alloy Iot** | **Treatment conditions** | | **Etching amount** | **Tensile shear strength** | | **Surface roughness (arithmetic average roughness (average Ra) and ten-point average roughness (average Rz))** | | | | | | | |
|---|---|---|---|---|---|---|---|---|---|---|---|---|---|---|
| | | **First roughening step** | **Second roughening step** | **(µm)** | **(Mpa)** | | **Ra (µm)** | | | **Average Ra** | **Rz (µm)** | | | **Average Rz** |
| **Example 1** | **1** | **35°C, Immersion 1 min** | **Surface treatment agent 1, 35°C, Immersion 60 sec** | **9.63** | **37.26** | **38.68** | **2.306** | **2.540** | **2.852** | **2.566** | **20.836** | **22.177** | **24.057** | **22.356** |
| **Example 2** | **1** | **35°C, Immersion 1 min** | **Surface treatment agent 1, 35°C, immersion 30 sec** | **5.05** | **36.63** | **38.44** | **1.782** | **2.019** | **2.153** | **1.985** | **14.866** | **16.572** | **18.163** | **16.534** |
| **Example 3** | **2** | **35°C, Immersion 1 min** | **Surface treatment agent 1, 35°C, immersion 30 sec** | **5.59** | **36.26** | **37.18** | **2.025** | **2.261** | **1.938** | **2.075** | **15.443** | **16.728** | **16.870** | **16.347** |
| **Example 4** | **1** | **35°C, Immersion 1 min** | **Surface treatment agent 2, 35°C, immersion 60 sec** | **5.81** | **22.16** | **18.63** | **0.537** | **0.780** | **0.690** | **0.669** | **8.057** | **9.310** | **9.125** | **8.831** |
| **Example 5** | **1** | **35°C, Immersion 1 min** | **Surface treatment agent 2, 35°C, Immersion 120 sec** | **8.87** | **15.86** | **17.93** | **0.817** | **0.901** | **1.093** | **0.937** | **11.910** | **12.073** | **12.626** | **12.203** |
| **Example 6** | **2** | **35°C, Immersion 1 min** | **Surface treatment agent 2, 35°C, Immersion 60 sec** | **5.80** | **15.95** | **17.26** | **0.697** | **0.479** | **0.502** | **0.559** | **10.272** | **7.067** | **7.729** | **8.356** |
| **Comparative Example 1** | **1** | **None** | **None** | **0** | **0** | **0** | **0.372** | **0.358** | **0.322** | **0.351** | **2.341** | **1.955** | **1.925** | **2.073** |
| **Comparative Example 2** | **2** | **None** | **None** | **0** | **0** | **0** | **0.142** | **0.151** | **0.152** | **0.149** | **1.516** | **2.149** | **2.011** | **1.892** |

In all of the methods of Examples, the tensile shear strength was more than 15 MPa. In addition, the values of the surface roughness (arithmetic average roughness (Ra) and ten-point average roughness (Rz)) were both higher than those of the Comparative Example.

### [Test 2: Cycle Test 1]

Each surface treatment agent shown in Table 4 was prepared.

**[Table 4]**

| **Blending wt%** | | | |
|---|---|---|---|
| **Alkaline surface treatment agent** | **24% Sodium hydroxide** | **65.0** | |
| | **Zinc nitrate hexahydrate** | **10** | |
| | **Sodium thiosulfate pentahydrate** | **0.5** | |
| | **DI Water** | **24.5** | |
| **Acidic surface treatment agent** | **Aluminum chloride hexahydrate** | **8** | **Aluminum concentration 0.9** |
| | **35% HCl** | **12.5** | **Acid concentration 4.4** |
| | **Ammonium chloride** | **1** | **Ammonium ion concentration 0.34** |
| | **Monoethanolamine** | **0.5** | |
| | **DI Water** | **78** | |

As a test substrate, an aluminum member (aluminum alloy ADC12) having a length and width of 40 mm × 40 mm and a thickness of 2 mm was prepared. The composition of the aluminum alloy ADC12 is shown in Table 5.

**[Table 5]**

| **Alloy** | **Chemical component (%)** | | | | | | | | | | | |
|---|---|---|---|---|---|---|---|---|---|---|---|---|
| | **Cu** | **Si** | **Mg** | **Zn** | **Fe** | **Mn** | **Cr** | **Ni** | **Sn** | **Pb** | **Ti** | **Al** |
| **ADC12** | **1.5 to 3.5** | **9.6 to 12** | **0.3 or less** | **1.0 or less** | **1.3 or less** | **0.5 or less** | **-** | **0.5 or less** | **0.2 or less** | **0.2 or less** | **0.30 or less** | **remai ning** |

The test substrates were continuously treated by the following method.

1 L of an alkaline surface treatment agent and 1 L of an acidic surface treatment agent were prepared.

The test substrate was first immersed in an alkaline surface treatment agent at 35°C for 1 minute, and then washed with water. Further, an immersion treatment was performed with an acidic surface treatment agent at 35°C for 1 minute and 30 seconds, and then the test piece was further washed with water at room temperature for 0.5 minutes and immersed in a 15% nitric acid aqueous solution at room temperature for 0.5 minutes. Thereafter, ultrasonic cleaning was performed for 2 to 3 minutes with an ultrasonic cleaning apparatus (Apparatus used: model CPX-2800H-J, manufactured by Yamato Scientific Co., Ltd., condition: frequency 40 kHz, room temperature), water washing was further performed for 0.5 minutes at room temperature, and then drying was performed with a dryer.

Four test substrates were treated per batch under these treatment conditions. The amount of flush water carried into the acidic surface treatment agent and the amount of carried out surface treatment agent per batch were adjusted to 10 mL each. The acid concentration was measured every 8 batches, and when the acid concentration reached 0.9 mol/L, 34 ml (or so that the acid concentration reached 1.25 mol/L) of 35% hydrochloric acid was added, and the etching amount of the test substrate, the surface roughness and the tensile shear strength of each test substrate were measured in the batches (2 batches) before and after the addition of hydrochloric acid.

The measurement of the aluminum concentration was carried out every 16 batches. The measurement was performed using an atomic absorption photometer (Device used: Model AA-7000, manufactured by SHIMADZU CORPORATION).

In addition, when the treatment was continuously performed, the components in the acidic surface treatment agent were diluted by carrying the flush water and adjusting the acid concentration, so that ammonium chloride and monoethanolamine were added every 32 batches so as to return to the blending amount before the treatment.

A cycle test was performed in which this was performed up to 161 batches (treatment area: 2.0 m²/L).

The etching amount and the surface roughness were measured in the same manner as in Test 1.

As for the tensile shear strength, after the completion of the cycle test (after 161 batches), an aluminum-resin composite of a test piece was prepared in the same manner as in Test 1 using the treated substrate of each target batch (4 sheets × 2 batches), and the tensile shear strength was measured.

The substrate other than the substrate used for each measurement was repeatedly used.

The results are shown in the graphs of Figs. 3 to 5.

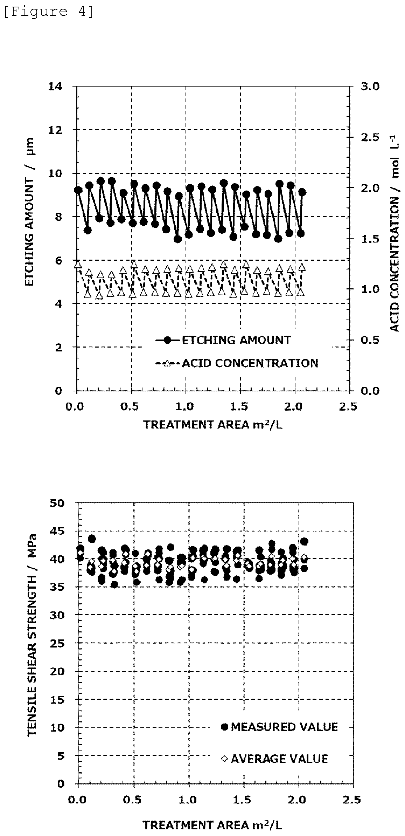

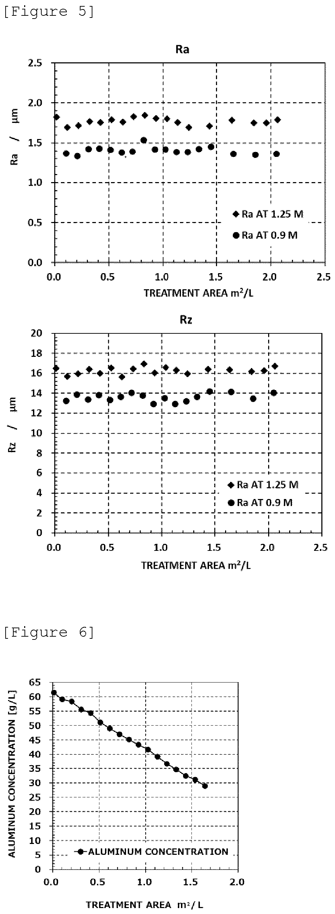

As shown in the graphs of Figs. 3 to 5, each measurement remained stable. That is, as shown in Fig. 3, the aluminum concentration remained stable throughout the treatment (Aluminum concentration: 9.7 to 13.0 g/L, 0.9 to 1.2 mass% in terms of mass%). As a result, as shown in Fig. 4, both the etching amount and the acid concentration were stable (etching amount 7.0 to 9.7 µm, acid concentration 0.94 to 1.25 mol/L, 3.2 to 4.3 mass% in terms of mass%), and the tensile shear strength was also found to be stable and good even when the continuous treatment was performed. As shown in Fig. 5, it was found that by maintaining the acid concentration between 0.9 mol/L (3.1 mass% in terms of mass%) and 1.25 mol/L (4.3 mass% in terms of mass%), the surface roughness was maintained in a good range (arithmetic average roughness (Ra): 1.33 µm to 1.85 µm, ten-point average roughness (Rz): 12.9 µm to 16.9 µm) throughout the treatment. From this, it is considered that components other than the aluminum concentration and the acid concentration were in a stable state throughout.

### [Test 3: Change in Component Concentration 1]

The component concentration of the acidic surface treatment liquid was set to each concentration shown in Table 6, and the etching amount, the tensile shear strength, and the surface roughness were measured in the same manner as in Test 1. The halogen ion in Table 6 is a chlorine ion.

As the test substrate, the substrate used in Test 2 (made of an alloy described in Table 5) was used.

The results are shown in Table 6.

**[Table 6]**

| | | **First surface treatment step** | | **Second surface treatment step** | | | | | | | **Etching amount** | **Tensile shear strength** | **Surface roughness (arithmetic average roughness and ten-point average roughness)** | |
|---|---|---|---|---|---|---|---|---|---|---|---|---|---|---|
| | | **Liquid tempera ture** | **Treatme nt time** | **Blending of surface treatment agents wt%** | | | | | **Liquid temperat ure** | **Treatme nt time** | | | **Ra** | **Rz** |
| | | **°C** | **min** | **Aluminum Ion** | **Acid concentration** | **Ammonium Ion** | **Halogen Ion** | **Monoethanola mine** | **°C** | **min** | **µm** | **MPa** | **µm** | **µm** |
| **Example** | **7** | **35** | **1** | **0.7** | **3.0** | **0.81** | **12.6** | **1.2** | **35** | **1.5** | **6.5** | **37.85** | **1.14** | **10.18** |
| **Example** | **8** | **↑** | **↑** | **0.7** | **3.2** | **0.81** | **13.1** | **1.2** | **↑** | **↑** | **6.9** | **38.18** | **1.34** | **12.21** |
| **Example** | **9** | **↑** | **↑** | **0.7** | **4.9** | **0.81** | **18.0** | **1.2** | **↑** | **↑** | **11.5** | **37.32** | **1.93** | **15.39** |
| **Example** | **10** | **↑** | **↑** | **0.2** | **3.5** | **0.67** | **11.8** | **1.0** | **↑** | **↑** | **6.6** | **37.21** | **1.15** | **10.39** |
| **Example** | **11** | **↑** | **↑** | **2.8** | **3.5** | **0.67** | **22.2** | **1.0** | **↑** | **↑** | **7.2** | **37.73** | **1.67** | **15.47** |
| **Example** | **12** | **↑** | **↑** | **3.8** | **3.5** | **0.67** | **25.9** | **1.0** | **↑** | **↑** | **7.0** | **37.45** | **1.60** | **14.31** |
| **Example** | **13** | **↑** | **↑** | **0.5** | **3.5** | **0.34** | **12.3** | **0.05** | **↑** | **↑** | **10.4** | **39.74** | **1.37** | **11.46** |
| **Example** | **14** | **↑** | **↑** | **0.5** | **3.5** | **0.34** | **12.3** | **0.1** | **↑** | **↑** | **8.9** | **40.11** | **1.52** | **13.10** |
| **Example** | **15** | **↑** | **↑** | **0.5** | **3.5** | **0.34** | **12.3** | **5.0** | **↑** | **↑** | **6.5** | **38.25** | **1.40** | **11.85** |
| **Example** | **16** | **↑** | **↑** | **0.5** | **3.5** | **0.033** | **11.8** | **0.1** | **↑** | **↑** | **10.7** | **39.42** | **2.02** | **13.28** |
| **Example** | **17** | **↑** | **↑** | **0.5** | **3.5** | **3.37** | **18.3** | **0.1** | **↑** | **↑** | **13.0** | **37.46** | **2.38** | **18.64** |
| **Comparative Example** | **3** | **↑** | **↑** | **0.7** | **2.8** | **0.81** | **12.1** | **1.2** | **↑** | **↑** | **4.0** | **31.92** | **0.83** | **8.95** |
| **Comparative Example** | **4** | **↑** | **↑** | **0.7** | **5.3** | **0.81** | **18.9** | **1.2** | **↑** | **↑** | **21.6** | **32.12** | **1.62** | **11.83** |
| **Comparative Example** | **5** | **↑** | **↑** | **0** | **3.5** | **0.67** | **11.0** | **1.0** | **↑** | **↑** | **7.1** | **30.05** | **1.58** | **11.39** |
| **Comparative Example** | **6** | **↑** | **↑** | **0.01** | **3.5** | **0.67** | **11.1** | **1.0** | **↑** | **↑** | **4.5** | **31.89** | **0.8** | **8.5** |
| **Comparative Example** | **7** | **↑** | **↑** | **4.2** | **3.5** | **0.67** | **27.8** | **1.0** | **↑** | **↑** | **5.6** | **30.56** | **1.27** | **11.99** |
| **Comparative Example** | **8** | **↑** | **↑** | **0.5** | **3.5** | **0.0** | **11.7** | **0.0** | **↑** | **↑** | **5.2** | **26.60** | **0.85** | **8.02** |
| **Comparative Example** | **9** | **↑** | **↑** | **0.5** | **3.5** | **0.0** | **11.7** | **0.1** | **↑** | **↑** | **10.4** | **32.31** | **1.56** | **12.65** |
| **Comparative Example** | **10** | **↑** | **↑** | **0.5** | **3.5** | **0.0** | **11.7** | **0.1** | **↑** | **↑** | **10.4** | **32.31** | **1.56** | **12.65** |

As shown in Table 6, in Examples, the etching amount, the tensile shear strength, and the surface roughness were all better than those in Comparative Examples.

### [Test 4: Change in Component Concentration 2]

The component concentration of the acidic surface treatment liquid was set to each concentration shown in Table 7, and the etching amount, the tensile shear strength, and the surface roughness were measured in the same manner as in Test 1.

The same alkaline surface treatment agent as in Test 1 was used, and the following components were used as the acidic surface treatment agent. Also, the same test substrate as in Test 2 was used.
35% hydrochloric acid: manufactured by KISHIDA CHEMICAL Co., Ltd., reagent (special grade)
Ammonium ion source: ammonium chloride, manufactured by FUJIFILM Wako Pure Chemical Corporation, reagent (special grade)
Aluminum ion source: aluminum chloride hexahydrate, manufactured by FUJIFILM Wako Pure Chemical Corporation, reagent (special grade)
Polyallylamine polymer: manufactured by Sigma-Aldrich, trade name: polyallylamine solution
Triethanolamine: manufactured by Sigma-Aldrich, reagent (special grade)
Monoethanolamine: manufactured by Sigma-Aldrich, reagent (special grade)
Bromine ion source: ammonium bromide, manufactured by FUJIFILM Wako Pure Chemical Corporation, reagent (special grade)

The results are shown in Table 7.

**[Table 7]**

| | **First surface treatment step** | **Second surface treatment step** | | | | | | | | | **Etching amount** | **Tensile shear strength** | **Surface roughness (arithmetic average roughness and ten-point average roughness)** | |
|---|---|---|---|---|---|---|---|---|---|---|---|---|---|---|
| | | **Blending of surface treatment agents wt%** | | | | | | | | **Treatment conditions** | | | | |
| | **Treatment conditions** | **Aluminum ion** | **Acid concentration** | **Ammonium ion** | **Halogen ion** | | **Amine compound** | | | | | | **Ra** | **Rz** |
| | | | | | **Chlorine ion** | **Bromine ion** | **Polyallylamine polymer** | **Triethanolamin e** | **Monoethanola mine** | | **µm** | **MPa** | **µm** | **µm** |
| **Example 18** | **Liquid temperature 35°C** | **0.5** | **3.5** | **0.34** | **12.3** | **0** | **0** | **0** | **0.0** | **Liquid temperature 35°C** | **9.0** | **36.74** | **1.58** | **12.12** |
| **Example 19** | | **0.7** | **3.5** | **0.55** | **12.5** | **2.4** | **0** | **0** | **1.0** | | **6.8** | **38.84** | **1.48** | **12.95** |
| **Example 20** | **Treatment time 1 min** | **0.7** | **3.5** | **0.67** | **13.8** | **0** | **0** | **1.0** | **0** | **Treatment time 1.5 min** | **8.5** | **39.18** | **1.64** | **13.74** |
| **Example 21** | | **0.7** | **3.5** | **0.67** | **13.8** | **0** | **1.0** | **0** | **0** | | **6.7** | **37.33** | **1.65** | **12.86** |

As shown in Table 7, the etching amount, the tensile shear strength, and the surface roughness were all good even when the type of the amine compound was changed and when the amine compound was not contained.

### [Test 5: Cycle Test 2]

Surface treatment agents (No ammonium ion and amine compound were not contained, and the aluminum concentration was set higher than Test 2.) shown in Table 8 were prepared as acidic surface treatment agents. The same alkaline surface treatment agent as in Test 2 was used. The same test substrate as in Test 2 was used.

**[Table 8]**

| **Blending wt%** | | | |
|---|---|---|---|
| **Acidic surface treatment agent** | **Aluminum chloride hexahydrate** | **45** | **Aluminum concentration 5.0** |
| | **35% HCl** | **10** | **Acid concentration 3.5** |
| | **DI Water** | **45** | |

A cycle test was performed up to 129 batches (treatment area: 1.6512 m²/L) in the same manner as in Test 2 except that ammonium chloride and monoethanolamine were not added in the middle. The results are shown in the graphs of Figs. 6 to 9.

As shown in the graphs of Figs. 6 to 9, it is shown that each measured value is not stable as compared with the case of Test 2.

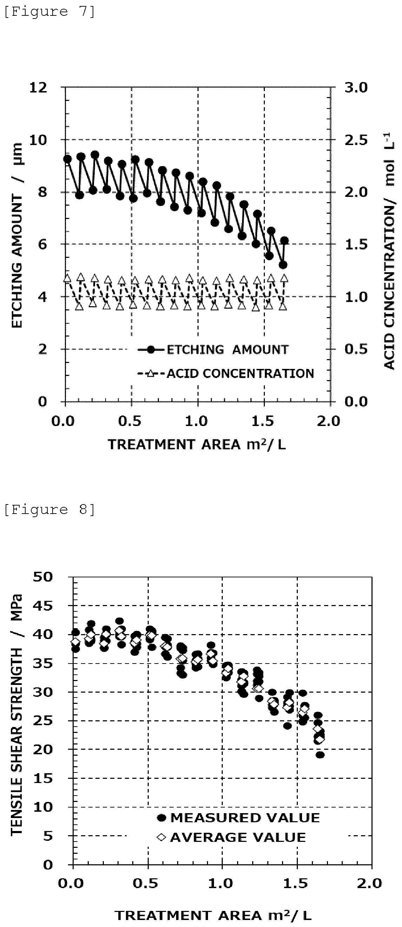

Since the acidic surface treatment agent in this test does not contain ammonium ions and an amine compound, the aluminum concentration is relatively high in order to obtain a certain etching amount or more. However, as illustrated in Fig. 6, the aluminum concentration decreases as the treatment area increases, and as illustrated in Fig. 7, the etching amount also decreases as the treatment area increases. As shown in Fig. 8, the tensile shear strength also decreased as the treated area increased, and the tensile shear strength remarkably decreased when the treated area exceeded 0.5 m², and the tensile shear strength decreased to become below 35 MPa when the treated area exceeded 1.0 m².

As described above, when the acidic surface treatment containing no ammonium ion and no amine compound was used, the treatment was not stable, and the tensile shear strength was also low.

### [Test 6: Cycle Test 3]

Each of the surface treatment agents (No amine compound is contained.) shown in Table 9 was prepared as an acidic surface treatment agent. The same alkaline surface treatment agent as in Test 2 was used. The same test substrate as in Test 2 was used.

**[Table 9]**

| **Blending wt%** | | | |
|---|---|---|---|
| **Acidic surface treatment agent** | **Aluminum chloride hexahydrate** | **6.5** | **Aluminum concentration 0.7** |
| | **35% HCl** | **12.5** | **Acid concentration 4.4** |
| | **Ammonium chloride** | **2** | **Ammonium ion concentration 0.67** |
| | **DI Water** | **79** | |

A cycle test is performed up to 117 batches (treatment area: 1.4976 m²/L) in the same manner as in Test 2 except that monoethanolamine was not added in the middle.

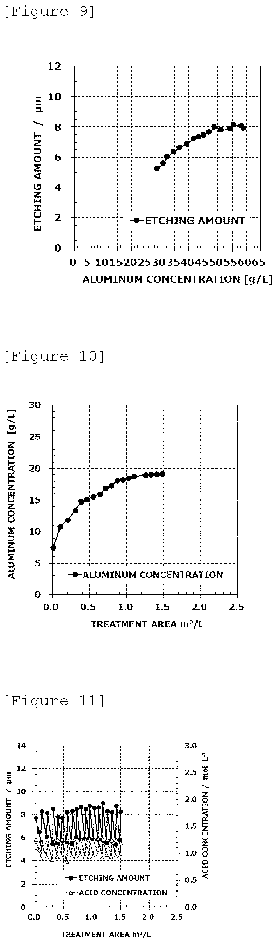

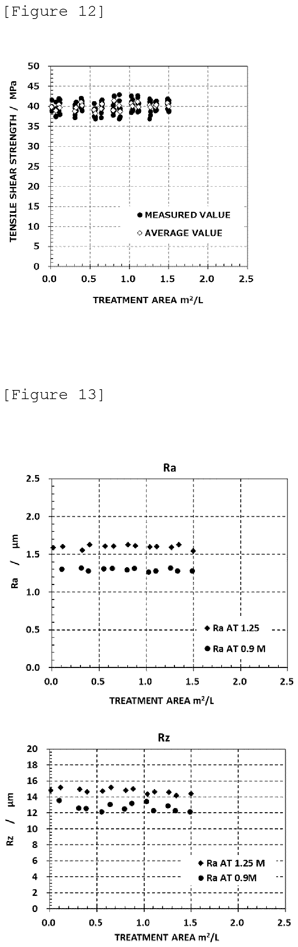

The results are shown in the graphs of Figs. 10 to 13.

As shown in the graphs of Figs. 10 to 13, it is shown that each measured value is stable as compared with the case of Test 5.

On the other hand, as compared with the results of Test 2, the etching amount was slightly small, and the numerical value of the surface roughness tended to be low as a whole.

## Claims

1. A method for producing an aluminum-resin composite comprising:
a first surface treatment step of bringing an alkaline surface treatment agent containing an alkali source, an amphoteric metal ion, an oxidizing agent, and a thio compound into contact with a surface of an aluminum member;
a second surface treatment step of bringing an acidic surface treatment agent containing a halogen ion, an aluminum ion, an ammonium ion, and an acid and containing the acid in an acid concentration of 3.0 mass% or more and 4.9 mass% or less and the aluminum ion in an acid concentration of 0.2 mass% or more and 3.8 mass% or less into contact with the surface of the aluminum member subjected to the first surface treatment step; and
a bonding step of bonding a resin composition to the surface of the aluminum member subjected to the second surface treatment step.

2. The method for producing an aluminum-resin composite according to claim 1, wherein the acidic surface treatment agent contains an amine compound.

3. The method for producing an aluminum-resin composite according to claim 2, wherein the acidic surface treatment agent contains the amine compound in an amount of 0.05 mass% or more and 5.0 mass% or less.

4. The method for producing an aluminum-resin composite according to claim 1, wherein the acidic surface treatment agent contains 0.033 mass% or more and 3.37 mass% or less of the ammonium ion.

5. The method for producing an aluminum-resin composite according to claim 1, wherein the halogen ion is at least one selected from the group consisting of a chlorine ion, a bromine ion, and a fluorine ion.

6. The method for producing an aluminum-resin composite according to claim 1, wherein the acidic surface treatment agent contains hydrochloric acid, aluminum chloride, and ammonium chloride.

7. The method for producing an aluminum-resin composite according to claim 1, wherein the thio compound of the alkaline surface treatment agent is one or more kinds selected from a thiosulfate ion and a thio compound having 1 to 7 carbon atoms.

8. The method for producing an aluminum-resin composite according to claim 1, further comprising a cleaning step of ultrasonically cleaning the surface of the aluminum member subjected to the second surface treatment step.

9. The method for producing an aluminum-resin composite according to claim 1, wherein in the second surface treatment step, the acid concentration of the acidic surface treatment agent is maintained in a range of 3.0 mass% or more and 4.9 mass% or less.

10. The method for producing an aluminum-resin composite according to claim 1, wherein in the second surface treatment step, an aluminum ion concentration of an acidic surface treatment agent is maintained in a range of 0.2 mass% or more and 3.8 mass% or less.

11. The method for producing an aluminum-resin composite according to claim 1, wherein the surface of the aluminum member subjected to the second surface treatment step has an arithmetic average roughness (Ra) of 0.5 µm or more and 3.0 µm or less and a ten-point average roughness (Rz) of 8 µm or more and 30 µm or less.

12. A surface treatment agent which is an acidic solution containing:
a halogen ion,
an acid having an acid concentration of 3.0 mass% or more and 4.9 mass% or less,
an aluminum ion having an acid concentration of 0.2 mass% or more and 3.8 mass% or less, and
an ammonium ion having an acid concentration of 0.033 mass% or more and 3.37 mass% or less, and
roughens aluminum by chemical etching by bringing the acidic solution into contact with a surface of an aluminum member.

13. The surface treatment agent according to claim 12, wherein the acidic solution contains 0.05 mass% or more and 5.0 mass% or less of an amine compound.

14. The surface treatment agent according to claim 12, wherein the halogen ion is at least one selected from the group consisting of a chlorine ion, a bromine ion, and a fluorine ion.

15. The surface treatment agent according to claim 12, wherein the acidic solution contains hydrochloric acid, aluminum chloride, and ammonium chloride.
